# EUROPÄISCHE PATENTANMELDUNG

(11) **EP 4 002 182 A1**
(43) Veröffentlichungstag der Anmeldung: **25.05.2022**
(21) Anmeldenummer: 20207717.8
(22) Anmeldetag: 16.11.2020
(51) Int. Cl.: G06F 21/73

(54) **PIEZOELEKTRISCHE RESONATOREN ALS PHYSISCH UNKLONIERBARE FUNKTIONEN (PUF)**

(71) Anmelder: Hahn-Schickard-Gesellschaft für angewandte Forschung e.V., 78052 Villingen-Schwenningen (DE)
(72) Erfinder: Bittner, Achim, 74080 Heilbronn (DE); Sikora, Axel, 79423 Heitersheim (DE)
(74) Vertreter: Hertin und Partner Rechts- und Patentanwälte PartG mbB

(57) **Zusammenfassung**

Die Erfindung betrifft in einem ersten Aspekt ein System zur Authentifizierung und/oder Feststellung der Identität eines Objektes auf Basis einer physisch unklonierbaren Funktion (PUF) umfassend ein PUF-Element, welches einen piezoelektrischen Resonator aufweist. Das PUF-Element dient der Generation eines kryptographischen Schlüssels, welcher von den physikalischen Eigenschaften des piezoelektrischen Resonators abhängt. Das System umfasst darüber hinaus einen Prozessor, welcher durch Senden und/oder Empfangen elektrische Signale Informationen über den kryptographischen Schlüssel des PUF-Elementes erhält und auf Basis der Information eine Authentifizierung und/oder Feststellung der Identität eines Objektes durchführt. In weiteren Aspekten betrifft die Erfindung ein elektronisches Gerät umfassend ein solches PUF-Element, eine Verwendung von piezoelektrischen Resonator als physisch unklonierbare Funktionen sowie Verfahren zur Authentifizierung und/oder Feststellung der Identität eines Objektes auf Basis eines PUF-Elementes, welches einen piezoelektrischen Resonator umfasst.

## Beschreibung

Die Erfindung betrifft in einem ersten Aspekt ein System zur Authentifizierung und/oder Feststellung der Identität eines Objektes auf Basis einer physisch unklonierbaren Funktion (PUF) umfassend ein PUF-Element, welches einen piezoelektrischen Resonator aufweist. Das PUF-Element dient der Generation eines kryptographischen Schlüssels, welcher von den physikalischen Eigenschaften des piezoelektrischen Resonators abhängt. Das System umfasst darüber hinaus einen Prozessor, welcher durch Senden und/oder Empfangen elektrische Signale Informationen über den kryptographischen Schlüssel des PUF-Elementes erhält und auf Basis der Information eine Authentifizierung und/oder Feststellung der Identität eines Objektes durchführt. In weiteren Aspekten betrifft die Erfindung ein elektronisches Gerät umfassend ein solches PUF-Element, Verwendungen von piezoelektrischen Resonatoren als physisch unklonierbare Funktionen sowie Verfahren zur Authentifizierung und/oder Feststellung der Identität eines Objektes auf Basis eines PUF-Elementes, welches einen piezoelektrischen Resonator umfasst.

### Hintergrund und Stand der Technik

Im Stand der Technik ist es bekannt, physisch unklonierbare Funktionen (PUFs) insbesondere zur Unterscheidung von integrierten Schaltkreisen (ICs) bzw. Chips zu verwendet werden.

Eine PUF ist insbesondere durch die Eigenschaft einer physische Unklonierbarkeit gekennzeichnet und hat als solche Ähnlichkeit zu biometrischen Merkmalen, wie Fingerabdrücke, Iris, Gesichtsgeometrie etc. Die physische Unklonierbarkeit meint bevorzugt, dass die Herstellung eines physischen Klons einer PUF extrem schwierig oder unmöglich ist.

Die Anwendungen für PUFs zur Identifikation und/oder Authentifizierung sind weitreichend und umfassen u.a. eine Erhöhung der Fälschungssicherheit von Produkten,, Implementationen in Multi-Faktor-Authentifizierungen, um den Zugang zu einem Computersystem oder Online-Netzwerken ermöglichen usw.

Insbesondere im Hinblick auf die verbreitete Verwendung von mobilen Geräten für alltägliche Aufgaben vom Einkauf bis zu finanziellen Transaktionen haben PUFs ein großes Potential. Häufig werden hierfür Passwörter eines Benutzers oder Authentifizierungs-Token für den Benutzer auf dem Gerät selbst gespeichert. Aufgrund der vielfältigen Nutzung mobiler Geräte in teilweise unsicherer Umgebung, besteht ein erhöhtes Bedrohungspotential, bei dem sich eine Unberechtigter einen Zugang zu vertraulichen Informationen verschaffen kann.

Zur Erhöhung der Sicherheit ist es in mobilen Systemen bekannt, einen geheimen Schlüssel in einen EEPROM (electrically erasable programmable read-only memory) oder einen SRAM (static random-access memory) zu speichern. Mittels kryptographischer Operationen wie digitaler Signaturen kann der geheime Schlüssel als Authentifizierungsquelle genutzt werden. Nachteilig bei der Verwendung von einem EEPROM oder SRAM sind die Kosten, der erhöhte Strombedarf, sowie die Anfälligkeit nichtflüchtiger Speicher für invasive Angriffsmechanismen (Herder et al. 2014).

PUFs stellen in dieser Hinsicht eine vielversprechende Alternative dar, da der geheime Schlüssel nicht in einem digitalen Speicher vorliegt, sondern von physikalischen Eigenschaften der PUFs abgeleitet werden kann.

Zur Implementation von PUFs gibt es im Stand der Technik verschiedenen Ansätze.

Frühe Arbeiten von Pappu et al. 2002 schlagen ein optisches System zur Implementierung einer *physical one way function* vor. Ein Laser wird auf ein stationäres Streumedium gerichtet und kann lateral bewegt werden. Zudem kann die Polarisation des Lasers modifiziert werden. Das aus der Streuung austretenden Laserlicht wird als "Speckle"-Muster detektiert und ist aufgrund einer Mehrfachstreuung stark abhängig von der Position sowie Polarisation des Lasers. Durch ein solches System kann ein starkes PUF-Element bereitgestellt werden, da es sehr schwierig bis nahezu unmöglich ein identisches Streumedium zu reproduzieren, um bei einer *challenge* (Laserposition bzw. Polarisation) die erwarte response (Speckle-Muster) zu erhalten. Dieser Arbeit folgten ähnliche Ansätze, welche auf der Erzeugung charakteristischer Speckle Mustern in zufällig angeordneten Materialien wie Papier, Glasdiffusern oder Phosphormustern basieren (Buchanan et al. 2005, Rührmaier et al. oder Chong et al. 2008).

WO 2007/046018 A1 beschreibt eine optische PUF mit einem kombinierten Sensor und einem Display. Einfallendes Licht wird durch ein Lichtstreuelement gestreut, welches aus einem Material besteht, das zufällig verteilte lichtstreuende Partikel enthält, so dass ein zufälliges Speckle-Muster erzeugt wird. Durch Einbeziehung reflektierender Bildelemente in das Gerät, soll ermöglicht werden, dass die angewandten *challenges* durch Aktivieren und Abschalten der Bildelemente modifiziert werden,

Während optische PUFs für überaus sichere Authentifizierungssysteme verwandt werden können, ist die technische Implementation aufwändig und kostenintensiv. Zudem ist das physisch unklonierbare Element, z.B. das lichtstreuende Material, von einer Messeinrichtung bzw. einem digitalen Messprozess separierbar. Sofern die PUF zur Authentisierung eines assoziierten Prozessors bzw. integrierten Schaltkreis (IC) genutzt werden soll, bedingt dieser Umstand ein intrinsisches Risiko.

Ein alternativer, im Stand der Technik verbreiteter Ansatz basiert auf der Integration von PUF-Elementen in den IC bzw. Prozessorstruktur selbst mittels konventioneller *complementary metal-oxide-semiconductor* (CMOS) Technologie.

Gassend et al. beschreiben 2002 die Integration eines halbleiterbasierten PUF-Elementes in einen konventionellen IC, wofür eine herstellungsbedingte Variabilität von Gate-Verzögerungen als unklonierbare physische Größe genutzt wird. Einen ähnlichen Ansatz verfolgend schlagen Lee et al 2004 ein PUF-Element als Schiedsrichter-PUF (*engl. arbiter PUF*) vor, wobei im Schaltkreis eine Rennsituation zwischen mindestens zwei digitalen Wegen eingeführt wird. Sofern die mindestens zwei digitalen Wege nominal den gleichen Verzug haben, kann auf Basis des Designs der Schaltkreise alleine keine Aussage über den Ausgang des Rennens getroffen werden. Vielmehr wird der Ausgang von Verzögerungsparametern für die beteiligten Halbleiterelemente bestimmt, welche herstellungsbedingt zufällig verteilt sind.

Eine alternative Variante von halbleiterbasierten PUFs, welche zufällig verteilte Verzögerungen innerhalb der Elemente eines Schaltkreises ausnutzen, sind sogenannte Ringoszillator-PUFs (vgl. u.a. Suh et al. 2007). Die Quelle der Zufälligkeit ist auch bei Ringoszillatoren der unkontrollierbare Effekt von Siliziumprozessvariationen auf die Verzögerung der digitalen Komponenten.

Wenn die Komponenten einen Ringoszillator bilden, wird die Frequenz der Schwingung entsprechend zufällig beeinflusst. Eine Ringoszillator-PUF-Konstruktion umfasst zumeist sowohl Ringoszillatoren als Verzögerungsschleifen sowie Frequenzzähler zum Auslesen der Verzögerung. Typischerweise werden eine Vielzahl von identischen Ringoszillatoren in einen *field programmable array* (FPGA) oder eine *application-specific integrated circuit* (ASIC) integriert.

Beide Varianten (*arbiter PUF* und *ring oscillator PUF*) zeichnen sich durch die Möglichkeit einer unmittelbaren Integration der PUF in Halbleiterschaltkreise aus, wobei vorteilhaft konventionelle CMOS-Prozesse genutzt werden können. Zum einen erleichtert dies die Herstellung, da im Gegensatz zu optischen PUFs keine zusätzlichen Prozesstechniken eingeführt werden müssen. Zudem erhöht die Möglichkeit der unmittelbaren Integration der PUFs in einen zu authentisierenden IC bzw. Prozessor die Sicherheit, da eine Trennung von PUF und zu authentisierendem Objekt nicht möglich ist.

Nachteilig an den bekannten PUFs ist es jedoch, dass in der Regel komplexe und spezifischen Halbleiterschaltungen benötigt werden, um aufgrund der geringen Entropie der Technologie eine ausreichende Verteilung zu erzielen, mit der Modellierungsangriffe ausgeschlossen werden können.

Im Lichte des Standes der Technik besteht mithin ein Bedarf an alternativen oder verbesserten PUF-Elementen für Verfahren zur Authentifizierung oder Feststellung der Identität von Objekten.

### Aufgabe der Erfindung

Aufgabe der Erfindung ist es, ein PUF-Element bzw. ein System umfassend eine solches PUF-Element bereitzustellen, welches die Nachteile des Standes der Technik beseitigt. Insbesondere ist es eine Aufgabe der Erfindung, ein PUF-Element bzw. ein System umfassend ein solches PUF-Element bereitzustellen, welches hochsichere kryptografische Schlüssel, beispielsweise zur Identifikation von Produkten oder Prozessoren codieren kann und sich gleichzeitig durch einen einfachen Aufbau, ein robustes Ausleseverfahren sowie ein kostengünstiges, massentaugliches Herstellungsverfahren auszeichnet.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung bevorzugt ein System zur Authentifizierung und/oder Feststellung der Identität eines Objektes auf Basis einer physisch unklonierbaren Funktion (PUF) umfassend
a. ein PUF-Element, wobei das PUF-Element dafür konfiguriert ist, einen kryptographischen Schlüssel zu erzeugen, welcher von den physikalischen Eigenschaften des PUF-Elementes abhängt und
b. einen Prozessor, welcher mit dem PUF-Element verbunden ist und dafür konfiguriert ist, durch Senden und/oder Empfangen elektrische Signale Informationen über den kryptographischen Schlüssel des PUF-Elementes zu erhalten und auf Basis der Information eine Authentifizierung und/oder Feststellung der Identität eines Objektes durchzuführen
und wobei das PUF-Element einen piezoelektrischen Resonator umfasst.

Das erfindungsgemäße System zeichnet sich durch ein PUF-Element aus, welches eine hochsichere und eindeutige Identifizierung des Objektes durch Senden und/oder Empfangen elektrische Signale eines Prozessors erlaubt.

Die Erfinder haben erkannt, dass zu diesem Zweck piezoelektrische Resonatoren ein überaus hohes, bisher unerkanntes Potential aufweisen. So wird durch das Layout von piezoelektrischen Resonatoren ein charakteristisches Resonanzspektrum erzeugt, welches aufgrund von Fertigungstoleranzen zufällig und somit in hohem Maße eindeutig für jeden piezoelektrischen Resonator ist.

Durch elektrische Anregung des piezoelektrischen Resonators mittels des Prozessors kann das charakteristisches Resonanzspektrum bzw. Schwingungsverhalten spezifisch geprobt werden. Das charakteristische Resonanzspektrum hängt hierbei von zufällig verteilten, individuellen physikalischen Eigenschaften des piezoelektrischen Resonators ab, welche nicht kopierbar sind. Auch bei identischen Produktionsprozessen für baugleiche piezoelektrische Resonatoren führen intrinsische Toleranzen stets zu einer individuellen und eindeutigen Verteilung der physikalischen Eigenschaften. Die zufälligen physikalischen Eigenschaften wiederum bedingen ein charakteristischen Resonanzspektrum bzw. Schwingungsverhalten, welches gleich einem spektralen Fingerabdruck einen kryptographischen Schlüssel codieren kann. Information über den kryptographischen Schlüssel können mittels des Prozessors durch Senden und/oder Empfangen von elektrischen Signalen erhalten werden.

Vorteilhaft können hierbei auch komplexe Eingaben (*challenges*) zum Einsatz kommen, welche verschiedene Schwingungsmodi und/oder Frequenzen betreffen. Ebenso stellen die Rückgaben (responses) piezoelektrischer Resonatoren vorteilhaft keine zwangsläufig diskrete, digitale Antwort dar (z.B. im Sinne des Vorliegens oder nicht Vorliegens einer Resonanz). Vielmehr ist der Response durch kontinuierliche Antwortparameter, wie z.B. eine Amplitude und/oder Phasenverschiebung in Abhängigkeit der anregenden elektrischen Signale, gekennzeichnet.

Kucera et al. untersuchen in einem Artikel aus dem Jahr 2014 die Messeigenschaften von piezoelektrischen Biegebalken für unterschiedliche Konfiguration in flüssigen Medien (Kucera et al. 2014). In diesem Zusammenhang wird das unterschiedliche Resonanzverhalten verschiedener Schwingungsmoden offenbart. Beispielsweise treten in Abhängigkeit der Dicke piezoelektrischen Biegebalken unterschiedliche Resonanzfrequenzen sowie Amplituden für *in-plane* oder *out-of-plane* Moden auf.

Kucera et al. 2014 haben das Ziel möglichst hochsensitive Messungen mittels der piezoelektrischen Biegebalken zu ermöglichen und optimieren vor dem Hintergrund u.a. die Konfigurationsparameter der piezoelektrischen Balken zur Maximierung des Q-Faktors. Die Ausnutzung zufällig verteilter physikalischer Eigenschaften von baugleichen piezoelektrischen Biegebalken für die Bereitstellung von PUFs wird weder offenbart noch nahelegt.

Aus Campanella 2007 ist bekannt, dass verschiedene Faktoren wie das Layout-Design, der Herstellungsprozess oder die physikalische Umgebung das Resonanzverhalten von *thin-film bulk acoustic wave resonators (FBAR)* beeinflussen.

Campanella diskutiert insbesondere Fertigungstoleranzen in Bezug auf eine kontrollierte Dünnschichtabscheidung, Oxidwachstum oder Mikrobearbeitung als ursächlich für eine Variation der Schichtdicken und mithin für Abweichungen von einer gewünschten Resonanzfrequenz. Gemäß Campanella ist die Dicke der piezoelektrischen Schicht der wichtigste Prozessparameter, welcher die Resonanzfrequenz der Filter-bildenden FBARs steuert. Analysen hätten gezeigt, dass die Toleranz eines ZnO-Abscheidungsprozesses auf Werte von weniger als ± 86 Å gehalten werden muss, um einen wettbewerbsfähigen Abzweigfilter mit Anwendung im PCS-Band (1,9 GHz) zu erhalten (Andersen et al. 1996).

Für eine AIN-Abscheidung zeigt der Autor Toleranzspannen von 10-15% hinsichtlich der Schichtdicke und Resonanzfrequenz aufgrund nicht-planarerAIN-Abscheidungen oder Fertigungstoleranzen auf. Campella schlägt nicht vor, auf Basis der Fertigungstoleranzen den individuellen Charakter der FBARs für PUF-Anwendungen zu nutzen. Vielmehr legt Campella nahe, durch ein Tuning von relevanten Prozessparametern während der Fertigung, nach der Fertigung oder während des Betriebes möglichst geringe Toleranzspannen zu gewährleisen. Selbst nach dem Tuning sind jedoch Toleranzen nicht zu vermeiden, welche unweigerlich zu einem charakteristischen Resonanzverhalten führen.

Während es im Stand der Technik durchaus bekannt war, dass piezoelektrische Resonatoren auch bei baugleicher Ausführung sich im Resonanzverhalten unterscheiden können, wurde die Nutzung als ein PUF-Element erstmals durch die Erfinder erkannt. Selbst ein und derselbe Hersteller wird nicht in der Lage sein, zwei piezoelektrische Resonatoren zu schaffen, welche ein absolut identisches Resonanzverhalten aufweisen. Stattdessen stellen die piezoelektrischen Resonatoren physisch nicht klonierbare Elemente dar, welche in dem erfindungsgemäßen System zur Authentisierung und/oder Feststellung der Identität eines Objektes genutzt werden können.

Analog zu bekannten halbleiterbasierten PUF-Elementen, welche in einen Prozessor bzw. eine integrierte Schaltung eingebracht werden, können für die Herstellung piezoelektrischer Resonatoren bevorzugt konventionelle CMOS-Prozesse zum Einsatz kommen. Im Gegensatz zu bekannten halbleiterbasierten PUF-Elementen, wie *arbiter PUFs oder ring oscillator* PUFs, sind jedoch keine komplexen Halbleiterschaltungen notwendig, um hinreichend unvorhersagbare und fälschungssichere Schlüssel zu genieren. Stattdessen kann durch einen Verzicht auf komplexe Halbleiterschaltungen und zusätzliche Halbleiterelemente eine signifikantes Kostenersparnis erzielt werden.

Im Sinne der Erfindung ist die Authentisierung vorzugsweise in ihrer breitesten Form zu verstehen und kann jedes Verfahren betreffen, um eine Aktion oder einen Zugriff basierend auf erhaltenden Informationen über einen kryptographischen Schlüssel des PUF-Elementes zu gewährleisten. Darüber hinaus sollten jegliche Identifikations- oder Verifikationsverfahren abgedeckt werden, welche ebenfalls auf der Bereitstellung von Informationen über den kryptographischen Schlüssel basieren.

Erfindungsgemäß umfasst das System zu diesem Zweck bevorzugt ein PUF-Element umfassend einen piezoelektrischen Resonator sowie einen Prozessor zum Auslesen von Informationen über den kryptographischen Schlüssel, welcher von den physikalischen Eigenschaften des PUF-Elementes abhängt.

Im Sinne der Erfindung bezeichnet der Begriff Prozessor bevorzugt einen logischen Schaltkreis, welcher Daten bzw. elektrische Signale senden, empfangen und verarbeiten kann. Bevorzugte Prozessoren umfassen ohne Beschränkung eine integrierte Schaltung (IC), ein Anwendungsspezifische integrierte Schaltungen (ASIC), ein Field Programmable Gate Array (FPGA), einen Mikroprozessor, einen Mikrocomputer, eine speicherprogrammierbare Steuerung und/oder eine sonstige elektronische, bevorzugt programmierbare, Schaltung.

Ein PUF-Element meint bevorzugt ein Bauteil, welches aufgrund physischer bzw. physikalischer Eigenschaften einen kryptographischen Schlüssel codiert, welcher mittels des Prozessors mindestens teilweise auslesbar ist. Das PUF-Element ist selbst nicht klonierbar. Dies bedeutet, dass bevorzugt keine physische Kopie des PUF-Elemente angefertigt werden kann, welche den identischen kryptographischen Schlüssel codiert bzw. erzeugen kann.

Die physikalischen Eigenschaften zweier PUF-Elemente unterscheiden sich bevorzugt durch kleinste Schwankungen im Produktionsprozess, selbst wenn durch das Produktionsverfahren absolut gleiche Bauteile bereitgestellt werden sollten. In Bezug auf piezoelektrischen Resonatoren handelt es sich bei den physikalischen Eigenschaften beispielsweise um eine Ausdehnung, Dicke oder Steifigkeit schwingfähiger Elemente, welche das Schwingungs- bzw. Resonanzverhalten der Resonatoren beeinflussen. Vorzugsweise umfasst das PUF-Element Bereiche, die eine Eingabe (Challenge) verarbeiten und daraus einen Rückgabewert (Response) erzeugen.

Für piezoelektrische Resonatoren als PUF-Elemente können hardwareseitige Elektroden bzw. Elektrodenpads zum Anschluss an den Prozessor vorliegen. Die Challenges können die Form von elektrischen Signalen annehmen, wobei es besonders bevorzugt ist, ein oder mehrere periodischen Signale mit vorbestimmten Anregungsfrequenzen als Challenge zu verwenden. Die Response kann ebenfalls in Form einer oder mehrerer elektrischer Signale erfolgen, deren Amplitude und/oder Phasenverschiebung eindeutig durch die physikalischen Eigenschaften des piezoelektrischen Resonators verändert sind. Es kann auch bevorzugt sein, dass die Response in Form von Messdaten über das mechanische Schwingverhalten des piezoelektrischen Resonators nach einer Anregung ausgelesen wird.

Im Sinne der Erfindung bezeichnet ein piezoelektrischer Resonator bevorzugt ein Bauelement umfassend ein schwingfähiges Element sowie ein piezoelektrisches Material, welches mittels elektrischer Signale zu Schwingungen angeregt werden kann. Physikalische Eigenschaften, wie die Ausdehnung, Dicke oder Steifigkeit der Komponenten des piezoelektrischen Resonators bestimmen bevorzugt das Schwingverhalten. Insbesondere für Frequenzen nahe der Eigenfrequenzen können Resonanzen auftreten.

In einer bevorzugten Ausführungsform der Erfindung umfasst der piezoelektrische Resonator eine schwingfähige Struktur, wobei die schwingfähige Struktur einen piezoelektrischen Aktuator umfasst, welcher zur Anregung der schwingfähigen Struktur konfiguriert ist. Eine schwingfähige Struktur kann beispielsweise eine schwingfähige und/oder schwingend gelagerte Membran oder einen Cantilever bzw. Biegebalken betreffen.

Schwingfähig bedeutet dabei insbesondere, dass die Struktur durch einen geeigneten Antrieb in Form eines Aktuators zu einer mechanischen Schwingung über längere Zeit angeregt werden kann, ohne dass es zu strukturellen Veränderungen (Beschädigungen) der Struktur kommt.

Die Schwingung kann eine einfache Schwingung im Wesentlichen entlang einer Raumdimension und/oder um eine eindimensionale Achse herum umfassen, es kann sich jedoch auch um eine komplexe, räumlich mehrdimensionale Schwingung bzw. Schwingungsmode handeln. Gleichzeitig sollen die Schwingungen vorzugsweise hinreichend ausgeprägt sein, dass die Schwingung bzw. kennzeichnende Eigenschaften von einer Messeinheit gemessen werden können. Das bedeutet insbesondere, dass aus der Messung der Schwingung ein messbares und elektronisch verarbeitbares elektrisches Signal generiert werden kann, welches vorteilhafterweise Informationen über die Schwingung und deren Eigenschaften enthalten kann, wie z. B. Schwingungsamplitude, Schwingungsfrequenz, Phase der Schwingung bevorzugt gegenüber einem anregenden elektrischen Signal.

Als Schwingung wird bevorzugt eine wiederholte zeitliche Schwankung von der räumlichen Auslenkung der Struktur bzw. von Bereichen der Struktur verstanden. Bevorzugt ist die Schwingung im Wesentlichen oder zumindest teilweise periodisch, das bedeutet vor allem zeitlich regelmäßig.

Periodische Schwingungen, insbesondere über mehrere Perioden hinweg betrachtet, können vorzugsweise durch die Schwingungsmode beschrieben werden. Die Schwingungsmode ist vorzugsweise eine Form der Beschreibung bestimmter zeitlich stationärer Eigenschaften einer Schwingung. Verschiedene Schwingungsmoden unterscheiden sich insbesondere in der räumlichen Verteilung der Schwingungsintensität, wobei die Form der Schwingungsmoden vorzugsweise durch Randbedingungen bestimmt wird, unter denen sich die Schwingung ausbreitet. Diese Randbedingungen können z. B. durch das Material, die Abmessungen und/oder die Lagerung der schwingfähigen Struktur sowie mindestens eines auf die Struktur einwirkenden Kraftvektors (umfassend bevorzugt die nominale Größe und/oder die Richtung der einwirkenden Kraft) gegeben sein.

Bei einem schwingenden Cantilever kann es z. B. mehrere Biegeschwingungsmoden geben, bei der sich der Cantilever entlang einer Vorzugsrichtung, z. B. senkrecht zu einer Ebene der Aufhängung des Cantilevers durchbiegt, die sich insbesondere in der Schwingungsfrequenz, der maximalen Schwingungsamplitude sowie in dessen räumlichem Auftreten unterscheiden können. Eine Biegeschwingungsmode ist dabei insbesondere dadurch gekennzeichnet, dass die Schwingung einen dynamischen Biegeprozess in Richtung im Wesentlichen einer Normalen zu einer Hauptebene des Cantilevers bzw. der schwingungsfähigen Struktur, beschreibt. Es kann jedoch auch andere Schwingungsmodi geben, z. B. eine Torsionsmode, welche eine Schwingung in Form einer periodischen Verdrehungsbewegung der Struktur entlang einer Achse beschreibt. Auch komplexere Moden, welche Überlagerungen anderer Moden darstellen, sind möglich. Bevorzugt findet eine Schwingung in einer Schwingungsmode statt. Ein Beispiel für eine komplexe Schwingungsmode ist die dachziegelartige (engl.: *rooftile-shaped*) Vibrations-Schwingungsmode, z. B. eines Cantilevers, bei welcher der Cantilever zwischen dachziegelartigen Verformungszuständen hin- und herschwingt.

Vorzugsweise ist neben der Struktur auch der piezoelektrische Aktuator zur Anregung solcher Schwingungen geeignet, da er für eine aktive Schwingungsanregung der Struktur konfiguriert ist. Der Aktuator sollte daher geeignet sein, eine von ihm generierte Kraft auf die Struktur zu übertragen, z. B. in dem er mit der Struktur in einer Art in Verbindung steht, welche eine Kraftübertragung ermöglicht. Vorzugsweise kann die Struktur auch den Aktuator selbst zumindest teilweise umfassen, beispielsweise wenn der Aktuator als eine piezoelektrische Schicht in der schwingfähigen Struktur (z.B. eine Membran oder ein Biegebalken) vorliegt.

Dabei sollte die Kraft selber geeignet sein, die Schwingungen auszulösen. Das bedeutet bevorzugt, dass die Kraft periodisch ist und vorzugsweise im Wesentlichen die Frequenz der zu erzeugenden Schwingungen der Struktur aufweist und geeignet ist, die Struktur in Schwingungen vorzugsweise in einer Schwingungsmode zu versetzen.

Es kann dabei bevorzugt sein, dass die Struktur elastische Eigenschaften aufweist, welche Schwingungen insbesondere entlang mindestens einer Richtung und/oder an mindestens einem Ort bzw. Bereich der Struktur unterstützen. Vorzugsweise lassen sich diese elastischen Eigenschaften durch mindestens eine Federkonstante beschreiben. Vorzugsweise weist die Struktur ebenfalls eine Masse auf, welche die Schwingungseigenschaften mitbestimmt. Es kann dabei bspw. sein, dass der Aktuator nur eine periodische, aktive Kraft für eine Auslenkung in eine Richtung erzeugt und die Struktur aufgrund Ihrer Rückstellkraft die Auslenkung in die entgegengesetzte hervorruft, woraus insgesamt die Schwingung entsteht. Bevorzugt setzt ein Aktuator insbesondere ein elektrisches Steuerungssignal in eine Bewegung um. Ein Aktuator ist bevorzugt ein piezoelektrischer Aktuator und eine periodische Kraft zur Schwingungsanregung aufgrund des piezoelektrischen Effekts erzeugen, wenn z. B. ein elektrisches Steuersignal in Form einer elektrischen Spannung mit periodischem Zeitverlauf an den Aktuator angelegt wird.

Dabei kann der Aktuator ein externes Element sein, welcher eine Anregungskraft mechanisch an die Struktur überträgt. Vorzugsweise ist der Aktuator jedoch von der Struktur umfasst und erzeugt z. B. innerhalb dieser die Kraft zur mechanischen Schwingungsanregung. Die elektrischen Signale zur Anregung der schwingfähigen Struktur werden bevorzugt durch den Prozessor generiert. Das Schwingverhalten der schwingfähigen Struktur wird hingegen durch physikalische Eigenschaften der Struktur und/oder des piezoelektrischen Aktuators bestimmt. Individuelle Schwingungsantworten (*response*) auf anregende elektrische Signale (*challenges*) können somit Information über einen kryptographischen Schlüssel bereitstellen, welcher durch die physikalischen Eigenschaften des piezoelektrischen Resonators bestimmt wird.

In einer weiteren bevorzugten Ausführungsform umfasst der piezoelektrische Resonator eine piezoelektrische Membran.

Eine Membran ist bevorzugt eine dünne, flächige Struktur mit einem Umfang in z. B. im Wesentlichen runder und/oder polygonaler Ausprägung. Die Membran ist vorzugsweise wenigstens bereichsweise entlang des Umfangs schwingbar gelagert.

Eine piezoelektrische Membran ist vorzugweise eine Membran, welche einen piezoelektrischen Aktuator umfasst. Das bedeutet bevorzugt, dass die Membran mindestens ein piezoelektrisches Material umfasst, welches aufgrund seiner Eigenschaften und/oder der Anordnung innerhalb des Membran bei geeigneter elektrischer Ansteuerung durch ein elektrisches Signal zu einer Schwingung führt, welche von den physikalischen Eigenschaften der piezoelektrischen Membran abhängt.

In einer bevorzugten Ausführungsform umfasst der piezoelektrische Resonator einen piezoelektrischer Biegebalken.

Ein Cantilever, oder synonym, Biegebalken ist vorzugsweise ein räumlich ausgedehntes, insbesondere längliches Element, welches entlang mindestens einer Seite schwingfähig gelagert und ansonsten vorzugsweise freistehend ist. Ein Cantilever kann z. B. die Form eines flächigen, länglichen Quaders aufweisen, dessen Dicke deutlich kleiner im Vergleich zur Quer- und Längsausdehnung ist, wobei bevorzugt die Querausdehnung kleiner ist als die Längsausdehnung. Bevorzugt sind einseitig schwingfähige Balken (Freischwinger). Es kann jedoch auch ein beidseitig bzw. mehrseitig schwingbar gelagerter Biegebalken bevorzugt sein.

Ein piezoelektrischer Balken ist vorzugweise ein Biegebalken, welcher einen piezoelektrischen Aktuator umfasst. Das bedeutet insbesondere, dass der Biegebalken mindestens ein piezoelektrisches Material umfasst, welches aufgrund seiner Eigenschaften und/oder der Anordnung innerhalb des Cantilevers bei geeigneter elektrischer Ansteuerung durch ein elektrisches Signal zu einer Schwingung führt, welche von den physikalischen Eigenschaften des piezoelektrischen Biegebalken abhängt.

Bevorzugt weist der piezoelektrische Balken oder die piezoelektrische Membran mindestens eine Kontaktierung zum Empfangen elektrische Signale von dem Prozessor auf, vorzugsweise in Form mindestens einer Elektrode, an welcher ein elektrisches Signal anliegt. Besonders bevorzugt umfasst ein piezoelektrischer Balken oder eine piezoelektrische Membran mindestens zwei Elektroden.

Ein piezoelektrisches Material ist bevorzugt ein Material, welches geeignet ist, einen piezoelektrischen Effekt aufzuweisen. Nicht beschränkende Beispiele sind Blei-Zirkonat-Titanat (PZT), Aluminiumnitrid (AIN) oder Zinkoxid (ZnO).

Der piezoelektrische Effekt beschreibt bevorzugt die Verformung eines Materials bei Anlegen einer elektrischen Spannung und/oder eines elektrischen Feldes (inverser Piezoeffekt), wodurch insbesondere durch das Material eine Kraft ausgeübt werden kann. Bevorzugt beschreibt der piezoelektrische Effekt ebenfalls die Änderung der elektrischen Polarisation und somit bevorzugt das Auftreten einer elektrischen Spannung und/oder eine Änderung der Impedanz an einem Festkörper, wenn er elastisch verformt wird (direkter Piezoeffekt).

Bevorzugt hängt die Verformung einer piezoelektrischen Struktur insbesondere von der elektrischen Polarisation innerhalb der Struktur ab und kann vorzugsweise u. a. durch Anordnung der Elektroden beeinflusst werden. Dadurch kann vorzugsweise die Schwingungsmode der Struktur beeinflusst werden.

Dabei kann der Balken bevorzugt ein unimorpher bzw. monomorpher Cantilever sein, der vorzugsweise eine aktive Schicht und eine inaktive bzw. passive Schicht umfasst. Dabei bezeichnet eine aktive Schicht vorzugsweise eine piezoelektrische Schicht, bei der eine Kraft bzw. eine Deformation durch ein anliegendes elektrisches Feld, insbesondere durch Anlegen einer elektrischen Steuerspannung, ausgelöst wird.

Diese Kraft bzw. Deformation erzeugt vorzugsweise ein Durchbiegen und/oder eine Verformung des Balkens, welche bevorzugt durch ein periodisches elektrisches Steuersignal eine aktive Schwingung auslösen kann. Die inaktive Schicht umfasst dabei vorzugsweise ein nicht-piezoelektrisches Material, wobei es sich um eine mechanisches Stützmaterial handeln kann. Dabei ist bevorzugt, dass aktive Schicht und inaktive Schicht so zusammenwirken, dass eine resultierende Kraft aufgrund der angelegten Steuerspannung erzeugt wird, welche eine Auslenkung des Balkens hervorruft, welche bei einer Periodizität des elektrischen Signals bevorzugt eine Schwingung verursacht. Es kann ebenso bevorzugt sein, dass auch die inaktive Schicht ein piezoelektrisches Material umfasst, welches jedoch nicht elektrisch kontaktiert und/oder durch ein elektrisches Signal angesteuert wird, an dem vorteilhafterweise kein elektrisches Signal angelegt wird und welche insbesondere kein externes elektrisches Feld erfährt, welches eine interne Kraft und/oder eine Verformung aufgrund des indirekten piezoelektrischen Effekts der inaktiven Schicht auslöst.

Ebenso kann der Cantilever bevorzugt ein bimorpher Cantilever sein, welcher vorzugsweise mindestens zwei aktive Schichten umfasst. Dabei kann bevorzugt eine inaktive Schicht zwischen den mindestens zwei aktiven Schichten vorhanden sein. Dabei ist bevorzugt, dass bei Anlegen einer elektrischen Spannung eine aktive Schicht kontrahiert, während die zweite aktive Schicht expandiert, wodurch vorteilhafterweise eine Biegung des Cantilevers erreicht wird, welche insbesondere gegenüber einem unimorphen Cantilever verstärkt ist, also z. B. bei gleicher angelegter Spannung eine größere Amplitude aufweist.

In einer bevorzugten Ausführungsform umfasst der piezoelektrische Resonator eine schwingfähige Struktur, wobei die schwingfähige Struktur, bevorzugt ein Biegebalken und/oder eine Membran, zwei Elektroden und eine piezoelektrische Zwischenschicht aus einem Material ausgewählt aus der Gruppe enthaltend Blei-Zirkonat-Titanat (PZT), Aluminiumnitrid (AIN) oder Zinkoxid (ZnO) aufweist.

Diese Ausführungsform erlaubt eine besonders einfache Herstellung piezoelektrischer Resonatoren und gewährleistet ein robustes Anregen und Auslesen. Die zwei Elektroden können dabei bevorzugt auf einer Oberfläche des Cantilevers oder einer Membran, z.B. oben oder unten, nebeneinander angeordnet sein und/oder auf gegenüberliegenden Oberflächen des Cantilevers oder einer Membran, oben und unten. Mindestens eine Elektrode kann dabei ebenso innerhalb, bspw. in einer Zwischenschicht des Cantilevers oder Membran, angeordnet sein. Vorzugsweise sind Material und/oder Anordnung der Elektroden ausgesucht für gewünschte Schwingungseigenschaften bzw. die gewünschte Schwingungsmoden.

Für die Herstellung kompakter, mechanisch-elektronischer Vorrichtungen wird heute auf vielen Anwendungsgebieten auf die Mikrosystemtechnik zurückgegriffen. Die so herstellbaren Mikrosysteme (engl. microelectromechanical system, kurz MEMS) sind sehr kompakt (Mikrometerbereich) bei gleichzeitig hervorragender Funktionalität und immer geringeren Herstellungskosten.

In einer weiteren bevorzugten Ausführungsform der Erfindung wird der piezoelektrische Resonator als MEMS-Bauelement ausgeführt, besonders bevorzugt handelt es sich um einen MEMS-Biegebalken oder eine MEMS-Membran.

Der piezoelektrische MEMS-Resonator umfasst bevorzugt einen piezoelektrischen MEMS-Aktuator, welcher bevorzugt mithilfe von üblichen Herstellungsmethoden der Mikrosystemtechnik hergestellt wird und des Weiteren vorteilhafterweise Abmessungen in der Größenordnung µm aufweist. Ein solcher Aktuator ist besonders kompakt, robust und wartungsarm und lässt sich einfach und kostengünstig herstellen.

Zudem kann die bevorzugt schwingfähige Struktur des Resonators, welche durch den Aktuator zu Schwingung angeregt wird, ebenfalls ein MEMS-Element sein, das heißt bevorzugt, dass die schwingfähige Struktur und Aktuator vorzugsweise in einem Prozess herstellbar sind und kompakt gehalten werden. Es kann dabei wünschenswerterweise in Teilen das gleiche Substrat zur Herstellung verwendet werden. Dies vereinfacht und verbilligt die Herstellung.

Bevorzugt können zur Herstellung der piezoelektrischen Resonatoren zudem ausschließlich CMOS-kompatible Materialien verwandt werden, sodass kostengünstige und massentaugliche Verfahren zur Bereitstellung der PUF-Elemente mittels CMOS-Technologie zum Einsatz kommen können.

In einer bevorzugten Ausführungsform der Erfindung wird der piezoelektrische Resonator und/oder der Prozessor auf einem Substrat gebildet, bevorzugt ausgewählt aus der Gruppe bestehend aus monokristallinem Silizium, Polysilizium, Siliziumdioxid, Siliziumcarbid, Siliziumgermanium, Siliziumnitrid, Nitrid, Germanium, Kohlenstoff, Galliumarsenid, Galliumnitrid, Indiumphosphid und Glas.

Diese Materialien sind in der Halbleiter- und/oder Mikrosystemherstellung einfach und kostengünstig zu bearbeiten und eignen sich für eine Herstellung im großen Maßstab. Insbesondere ist bevorzugt eine Herstellung piezoelektrischen Resonators umfassend eine schwingfähige Struktur zusammen mit einem Prozessor auf einem Wafer möglich. Hierdurch wird die Herstellung weiter vereinfacht und verbilligt, sodass kostengünstig ein kompaktes und robustes System bereitgestellt werden kann.

Der Fachmann kennt Herstellungsverfahren, um einen piezoelektrischen Resonator, bevorzugt einen piezoelektrischen Biegebalken und/oder eine piezoelektrische Membran auf einem Substrat ausbilden. Hierzu kann beispielsweise folgende Schritte verwandt werden: Ätzen eines Substrats, Ausbildung einer Strukturierung, Optionales Auftragen eines Ätzstops, Aufbringen einer oder mehrerer Lagen. wobei mindestens erste Lage ein piezoelektrisches Aktuatormaterial und eine zweite Lage ein mechanischen Stützmaterial umfassen kann oder beide zwei Lagen ein Aktuatormaterial umfassen, Kontaktieren der ersten und/oder zweiten Lage mit einer Elektrode, Ätzen und optionale Entfernung des Ätzstops.

Als Substrat kann z. B. eines der bevorzugten, vorstehend genannten Materialien verwendet werden. Beim Ätzen kann ein Rohling, beispielsweise ein Wafer, in die gewünschte Grundform gebracht werden. In einem nächsten Schritt werden bevorzugt die Lagen für eine schwingfähige Struktur, z.B. einen Biegebalken oder eine Membran, aufgebracht.

Bevorzugt kann das Aufbringen ausgesucht sein aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD). Insbesondere kann das Aufbringen beispielsweise ein Abscheiden, z. B. im Falle eines Substrats aus Polysilizium, umfassen.

Ein Ätzen und/oder eine Strukturierung kann bevorzugt ausgesucht sein aus der Gruppe umfassend Trockenätzen, nasschemisches Ätzen und/oder Plasmaätzen, insbesondere Reaktives lonenätzen, Reaktives lonentiefenätzen (Bosch-Prozess).

Zur Kontaktierung der Lagen kann zusätzlich geeignetes Material, wie z. B. Kupfer, Gold und/oder Platin durch gängige Prozesse abgeschieden werden. Hierfür können bevorzugt physikalische Gasphasenabscheidung (PVD), chemische Gasphasenabscheidung (CVD) oder elektrochemische Abscheidung zum Einsatz kommen.

Mittels der Prozessschritte können piezoelektrischen Resonatoren als PUF-Elemente bereitgestellt werden mit Abmessungen im Mikrometerbereich. Die Herstellungsschritte gehören zu Standardverfahrensschritten der Halbleiterprozessierung, sodass diese sich bewährt haben und zudem für eine Massenherstellung geeignet sind.

Der Prozessor zum Senden und/oder Empfangen elektrischer Signale kann vorzugsweise auf demselben Substrat mittels bekannter Halbleiterprozessierung integriert werden. Vorteilhaft sind für die Ausführungsform PUF-Element und Prozessor physisch nicht separierbar, wodurch die Sicherheit nochmals erhöht wird.

Es kann aber auch bevorzugt sein, den piezoelektrischen Resonator als PUF-Element auf einem von dem Prozessor separaten Substrat bereitzustellen und beiden Komponenten anschließend durch elektrische Kontaktierung zu verbinden.

In einer bevorzugten Ausführungsform der Erfindung hängt der kryptographische Schlüssel, welcher durch die physikalischen Eigenschaften des PUF-Elementes festgelegt wird, von einer Schwingungsantwort des piezoelektrischen Resonators auf eine Schwingungsanregung ab.

Ein kryptographischer Schlüssel bezeichnet bevorzugt eine Information, welche dazu geeignet ist, ein kryptographisches Verfahren zur parametrisieren oder zu steuern.

Bevorzugt wird der kryptographische Schlüssel durch diejenigen physikalischen Eigenschaften des piezoelektrischen Resonators festgelegt, welche dessen Schwingungsantwort auf ein Schwingungsanregung vorgeben. Hierzu gehören beispielsweise eine Ausdehnung, Dicke, Elastizität oder Materialzusammensetzung einer schwingfähigen Struktur des piezoelektrischen Resonators.

Vorteilhaft bestehen zwischen einer schwingungsfähigen Struktur und einem piezoelektrischen Aktuator zum Antrieb erzwungener Schwingung, komplexe Wechselwirkungen, welche u. a. durch Resonanzfrequenzen (oder Eigenfrequenzen) der Struktur, Dämpfungseigenschaften der Struktur oder auch eines Fluids in dessen Umgebung vorgeben sind. Die exakte Schwingungsantwort bzw. das charakteristische Resonanzspektrum eines piezoelektrischen Resonators kann vorteilhaft selbst unter Kenntnis der Prozessparameter nicht ohne Weiteres vorhergesagt werden. So kann eine einfach zu beschreibende, periodische Krafteinwirkung entlang einer Richtung auch wesentlich komplexere Schwingungsmuster erzeugen, welche von den exakten physikalischen Prozessparameter abhängt. Es ist daher sehr schwierig, eine Schwingungsantwort bzw. Rückgabe (Response) aus einer Schwingungsanregung bzw. Eingabe (Challenge) vorherzusagen.

In einer bevorzugten Ausführungsform umfasst der piezoelektrische Resonator eine schwingfähige Struktur und die physikalischen Eigenschaften des piezoelektrischen Resonators, welche den kryptographischen Schlüssel des PUF-Elementes festlegen, sind ausgewählt aus der Gruppe enthaltend geometrische Abmessung der schwingfähigen Struktur, beispielsweise Länge, Höhe und/oder Dicke eines piezoelektrischen Balkens oder Membrandicke einer piezoelektrischen Membran, Elastizität, Schichtdicke und/oder Zusammensetzung eines piezoelektrischen Materials der schwingfähigen Struktur.

Das charakteristische Resonanzspektrum bzw. die Schwingungsantwort des piezoelektrischen Resonators auf eine Schwingungsanregung sind besonders sensitiv im Hinblick auf die vorgenannten physikalischen Eigenschaften. Die bevorzugten physikalischen Eigenschaften tragen aus dem Grunde bevorzugt maßgeblich zur erwünschten Bereitstellung von PUF-Elementen mit individuellen Resonanzeigenschaften bei. Zudem lassen sich Toleranzbereiche für die physikalischen Eigenschaften als Prozessparameter herstellungsseitig vorgeben und eröffnen somit eine gezielte Optimierung der PUF-Elemente für verschiedene Anwendungen.

In einer bevorzugten Ausführungsform werden die physikalischen Eigenschaften des piezoelektrischen Resonators, welche den kryptographischen Schlüssel des PUF-Elementes festlegen, während des Fertigungsprozesses festgelegt und fallen als Zufallsgrößen in einen festgelegten Toleranzbereich für den Fertigungsprozess.

Bevorzugt werden für den Fertigungsprozess piezoelektrischer Resonatoren Toleranzbereiche für bestimmte physikalische Eigenschaften festgelegt. Beispielsweise kann für die Schichtdicke eines Biegebalken oder einer Membran ein Toleranzbereich von 15 % oder weniger, vorzugsweise 10% oder weniger festgelegt werden.

Innerhalb der Toleranzbereiche liegen die physikalischen Eigenschaften der hergestellten Bauelemente statistisch verteilt vor. Bei Herstellung einer Vielzahl piezoelektrischer Resonatoren mit den vorgegeben Fertigungsparameter zur baugleichen Ausführung, werden dementsprechend individuelle Bauelement mit statistisch verteilten physikalischen Eigenschaften erhalten. Bei erfindungsgemäßer Verwendung der piezoelektrischen Resonatoren als PUF-Elemente bedingt die statistische Verteilung physikalische Eigenschaften (beispielsweise einer Schichtdicke), kryptographisch relevante Werte hinsichtlich der PUF-Elemente, wie Entropie, Intra-Hamming Distanz oder Inter-Hamming Distanz.

Die Toleranzbereiche innerhalb der Fertigungsprozesse können somit zur Optimierung der statistischen Eigenschaften der PUF-Elemente genutzt werden, um möglichst sichere Authentifizierungs- oder Identifikationsverfahren zu gewährleisten.

Verschiedene Fertigungsprozesse können zu diesem Zweck genutzt werden. Beispielhaft gehören hierzu Prozessschritte zur Dünnschichtabscheidung, Oxidwachstum oder Mikrobearbeitung, welche insbesondere zu Variation von Schichtdicken und mithin zu Variation der Schwingungsantworten bzw. Resonanzspektren führen. Insbesondere durch *chemical mechanical polishing* (CMP) oder *TCF-compensation layer* während der Herstellung (*in-fabrication*) *oder thin film deposition* bzw. *localized mass deposition* nach der Fertigstellung (*post-fabrication*) kann gezielt Einfluss auf Toleranzspannen für physikalische Eigenschaften der Resonatoren (wie z.B. die Schichtdicke) genommen werden.

Neben den Fertigungsprozess kann auch während des Betriebes eines PUF-Elementes die die physikalischen Eigenschaften des piezoelektrischen Resonators beeinflusst werden.

In einer bevorzugten Ausführungsform können die physikalischen Eigenschaften des piezoelektrischen Resonators, welche den kryptographischen Schlüssel des PUF-Elementes festlegen, durch eine Tuningeinheit zusätzlich beeinflusst werden, wobei die Tuningeinheit eine elektrostatische Tuningeinheit, eine magnetostatische Tuningeinheit und/oder eine thermische Tuningeinheit ist.

Mittels der Tuningeinheit können gezielt Umgebungsparameter für den piezoelektrischen Resonator als PUF-Element verändert werden, welche das Schwingungs- bzw. Resonanzverhalten beeinflussen.

Eine elektrostatische Tuningeinheit kann vorzugsweise einen einstellbaren Kondensator umfassen, mittels dessen das elektrostatische Feld variierbar ist, in welchem sich der piezoelektrische Resonator befindet. Durch die Variation des elektrischen Feldes können die elektrischen Eigenschaften der piezoelektrischen Materialien verändert werden, sodass das Resonanzspektrum zusätzlich modifiziert wird (Lancaster et al. 1998).

Eine magnetostatische Tuningeinheit kann vorzugsweise einen einstellbaren Elektromagneten aufweisen. Sofern der piezoelektrische Resonator bzw. dessen schwingfähige Struktur ferromagnetische Materialien aufweist oder mit magnetischen Partikeln versetzt ist, kann die Variation eines externen Magnetfeldes zusätzlichen mechanischen Stress auf die schwingfähigen Strukturen ausüben und hierdurch das Resonanzspektrum zusätzlich modifizieren (Maya et al. 1995).

Ein thermische Tuningeinheit kann vorzugsweise ein Heizelement, optional zusammen mit einem Temperatursensor, umfassen, um die Umgebungstemperatur des piezoelektrischen Resonators zu steuern, welche ebenfalls das Resonanzverhalten beeinflussen kann.

In einer bevorzugten Ausführungsform der Erfindung umfasst der piezoelektrische Resonator eine schwingfähige Struktur und das System weist eine Messeinheit zur Messung der Schwingungseigenschaften der schwingfähigen Struktur auf.

Die Messeinheit ist bevorzugt geeignet zur Messung der Schwingungseigenschaften und insbesondere zur Messung eines zeitlichen Verlaufs der Schwingungseigenschaften. Die Schwingungseigenschaften der Struktur bzw. deren zeitlichen Verlauf stellen vorzugsweise Schwingungsantworten (Response) auf anregende elektrische Signale (Challenges) dar, mittels derer, wie beschrieben, Informationen über den kryptographischen Schlüssel erfasst werden können.

Die Schwingungseigenschaften betreffen vorzugsweise die Schwingungsamplitude, die Schwingungsfrequenz, die Schwingungsmode, die Schwingungsphase (z. B gegenüber einem periodischen Anregungssignal, welches vom Prozessor appliziert wird), die Schwingungsintensität oder eine Dämpfung der Schwingung. Schwingungseigenschaften der Struktur, wie Frequenz, Amplitude oder Phasenverschiebung sind vorzugsweise messbar durch eine Messung der Auslenkung der Struktur an mindestens einem Ort und/oder mindestens einem Bereich der Struktur, wobei eine Betrachtung der Auslenkung über mindestens eine Schwingungsperiode, vorzugsweise mehrere Schwingungsperioden erfolgt.

Zur Messung der Schwingungseigenschaften können unterschiedliche Komponenten verwandt werden.

In einer bevorzugten Ausführungsform umfasst das System eine elektrische Messeinheit, bevorzugt zur Messung der Schwingungseigenschaften der schwingfähigen Struktur des piezoelektrischen Resonators durch eine Impedanzmessung und/oder eine kapazitive Messung.

Eine Impedanz beschreibt insbesondere das Verhältnis von einer elektrischen Spannung zu einem elektrischen Strom, wobei insbesondere sinusförmige Spannungen und Ströme zugrunde gelegt werden und die Impedanz bevorzugt sowohl Informationen über das Verhältnis der Amplituden der Spannungen und Ströme sowie über deren Phasenverhältnis zueinander umfasst. Insbesondere bei einer Struktur, die mindestens ein piezoelektrisches Material umfasst, kann vorzugsweise an der Struktur, insbesondere an den Elektroden, die Impedanz vermessen werden, welche aufgrund der Verformung der Struktur und deren piezoelektrische Eigenschaften eine Abhängigkeit von den Schwingungseigenschaften aufweist. Dabei kann diese Impedanz vorzugweise auch an den Elektroden abgelesen werden, an denen ein elektrisches (Steuer-)signal zur Anregung der Schwingung anliegt. Hierbei überlagert sich vorzugsweise die Spannung des Steuersignals mit einer aufgrund der Verformung und/oder der Schwingungseigenschaften und deren Einfluss auf die Impedanz messbaren Spannung bzw. Stromes.

Diese Spannung und/oder dieser Strom weist vorzugsweise eine andere Amplitude und/oder eine Phasenverschiebung im Verhältnis zum anregenden Steuersignal auf, welche sich messen lässt, beispielsweise durch Verwendung einer Lock-In-Technik unter Zuhilfenahme eines Lock-In-Verstärkers. Dabei kann am Eingang des Lock-In-Verstärkers bevorzugt ein zum elektrischen Steuersignal proportionales elektrisches Signal als Referenz anliegen und durch den Lock-In-Verstärker, bevorzugt unter Verwendung weiterer elektronischer Komponenten, die Impedanz der schwingungsfähigen Struktur im Vergleich zu dem Referenzsignal vermessen werden. Hierdurch können insbesondere Aussagen über das Phasenverhältnis der Impedanz zum Referenzsignal und/oder Amplitude der Impedanz getroffen werden, welche eine Bestimmung der Schwingungseigenschaften der Struktur ermöglicht.

Es kann ebenso bevorzugt sein, eine Impedanz an zusätzlichen Elektroden zu vermessen, an denen kein elektrisches Steuersignal gleichzeitig anliegt. Insbesondere kann dort aufgrund des direkten piezoelektrischen Effekts ein Strom und/oder eine Spannung vermessen werden, welche zu einer Vermessung der Schwingungseigenschaften der Struktur geeignet ist.

Durch Verwendung der Lock-In-Technologie kann eine besonders rauscharme Messung der Schwingungsantworten mit einem hohen Signal-zu-Rauschverhältnis realisiert werden.

Eine elektrische Messeinheit kann vorzugsweise zudem zu einer kapazitiven Messung der schwingfähigen Struktur verwendet werden. Eine kapazitive Messung umfasst insbesondere eine Messung einer elektrischen Kapazität. Vorzugsweise kann die schwingfähige Struktur für eine solche Messung mindestens eine (mitschwingende) Elektrode aufweisen, wobei z. B. eine Kapazität zwischen dieser Elektrode und einer nicht mit der Struktur mitschwingenden Elektrode gemessen wird. Dabei ändert sich ein vom Schwingungsverhalten abhängigen Abstand zwischen den Elektroden und mithin deren Kapazität bzw. eine zwischen den Elektroden messbare Spannung und/oder eine Impedanz, eines durch die Elektroden gebildeten Kondensators, welche z. B. durch Anlegen eines Wechselstroms und/oder einer Wechselspannung gemessen werden kann.

Derartige elektrische Messeinheiten können kostengünstig und unmittelbar auf demselben Chip, wie der piezoelektrische Resonator bzw. der Prozessor integriert werden.

In einer weiteren Ausführungsform umfasst das System eine optische Messeinheit, bevorzugt umfassend einen Photonenstrahler und einen Photodetektor, wobei der Photonenstrahler derart auf die schwingfähige Struktur ausgerichtet ist, dass mittels des Photodetektors die Schwingungseigenschaften der schwingfähigen Struktur gemessen werden können.

Der vom Photonenstrahler emittierter Licht- bzw. Photonenstrahl ist auf die schwingfähige Struktur ausgerichtet, sodass dessen Strahlung bevorzugt im Wesentlichen oder teilweise von der Struktur reflektiert wird. Dafür können vorzugsweise das Spektrum der Emission des Photonenstrahlers und/oder die Oberfläche der schwingfähigen Struktur, an der die Reflektion stattfindet, abgestimmt sein, so dass der Strahl im Wesentlichen oder mindestens teilweise reflektiert wird. Dabei sind vorzugsweise Photonenstrahler, Photodetektor und/oder die Struktur so zueinander ausgerichtet, dass der von der Struktur reflektierte Strahl im Wesentlichen oder teilweise in einer Detektionsoberfläche des Photonendetektors absorbiert und vom Detektor bevorzugt in ein mess- und/oder auslesbares elektrisches bzw. elektronisches Signal umgewandelt wird, welches Aussagen über die Schwingungseigenschaften der Struktur zulässt.

Begriffe wie im Wesentlichen, ungefähr, etwa, ca. etc. beschreiben bevorzugt einen Toleranzbereich von weniger als ± 20%, bevorzugt weniger als ± 10%, besonders bevorzugt weniger als ± 5 %, noch stärker bevorzugt weniger als ± 3% und insbesondere weniger als ± 1%. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Es kann bevorzugt sein, dass die optische Messeinheit weitere optische Elemente, wie z.B. einen Strahlteiler umfasst und der Photonenstrahler ein Laser oder eine Laserdiode ist, sodass die Schwingungseigenschaften der Struktur durch die optische Messeinheit beispielsweise über eine interferometrische Messung ausgelesen werden können.

Dabei kann insbesondere ein an der Struktur reflektierter Teilstrahl mit einem nicht an der Struktur reflektierten Teilstrahl überlagert werden, wobei beide Teilstrahlen im Wesentlichen oder teilweise zueinander kohärent sind und miteinander interferieren. Durch eine Messung der resultierenden konstruktiven bzw. destruktiven Interferenz der Teilstrahlen in bekannter Weise Aussagen über den zeitlichen Verlauf der Auslenkung der Struktur und deren die Schwingungseigenschaften getroffen werden.

In einer bevorzugten Ausführungsform weist das System zusätzlich zu einer Messeinheit zur Messung der Schwingungsantwort mindestens einen weiteren Sensor zur Bestimmung von Umgebungsparametern, wie beispielsweise einen Temperatursensor, eine Luftdrucksensor oder einen Feuchtigkeitssensor. Umgebungsparameter, wie die Temperatur, können teilweise das Schwingungsverhalten piezoelektrischer Resonatoren beeinflussen und stellen somit potentielle Fehlerquellen im Hinblick auf den erzeugten kryptographischen Schlüssel dar. Die zusätzlichen Messdaten über die Umgebungsparameter können vorteilhaft in Fehlerkorrekturverfahren einfließen, sodass auf robuste Weise besonders sichere Schlüssel erzeugt werden können.

In einer bevorzugten Ausführungsform umfasst das PUF-Element zwei oder mehr piezoelektrische Resonatoren, welche seriell oder parallel mit einander verbunden sind. Bevorzugt kann hierdurch der Output eines piezoelektrischen Resonators als Input eines weiteren piezoelektrischen Resonators genutzt wird, um auf diese Weise miteinander verbundene kryptographische Schlüssel zu erzeugen, die in einem Schlüsselbund (engl. *key rings*) organisiert werden können.

Bevorzugt ist die Kopplung zwischen den zwei oder mehr piezoelektrischen Resonatoren elektrisch. So kann ein erster piezoelektrischer Resonator mittels eines elektrischen Signals des Prozessors, wie beschrieben, zu Schwingungen angeregt und hierdurch ein elektrisches Ausgabesignal genieren. Das elektrische Ausgabesignal des ersten Resonators kann bevorzugt als elektrisches (Eingangs)Signal zur Anregung eines zweiten piezoelektrischen Resonators genutzt werden. Das erhaltene Ausgabesignal des gesamten PUF-Elementes entspricht mithin einer Verkettung von zwei oder mehr Resonatoren, sodass ein besonders komplexer kryptographischer Schlüssel bereitgestellt werden kann.

Während die elektrische Kopplung zwischen den Resonatoren bevorzugt ist, kann alternativ oder zusätzlich eine mechanische Kopplung vorgesehen sein. Hierbei wird das PUF-Element derart konstruiert, dass die Schwingungsantwort eines ersten Resonators als mechanischer Input für einen in der Kette folgenden Resonator verwandt wird.

In einer bevorzugten Ausführungsform weist das System eine mit dem Prozessor verbundene Kommunikationsschnittstelle auf, welche dafür konfiguriert ist, von einer externen Entität eine Challenge zu empfangen und eine Response zu senden, wobei der Prozessor dafür konfiguriert ist, als Antwort auf die Challenge einen Response zu generieren, welcher von den physikalischen Eigenschaften des PUF-Elementes abhängt.

Bei der Kommunikationsschnittstelle kann es sich um eine standardisierte Schnittstelle handeln zum Austausch von Daten, wie beispielsweise Bluetooth, Lightning, USB, WLAN etc. handeln. Es kann sich jedoch auch um eine individuell für das System entwickelte Schnittstelle handeln. Die Schnittstelle kann drahtlos oder kabelgebunden sein.

Der vom Prozessor generierte Response ist bevorzugt durch eine Messung der Schwingungsantwort(en) des piezoelektrischen Resonators in Abhängigkeit einer oder mehrerer anregender elektrischer Signale (Challenges) vorgeben. Bevorzugt können die Messdaten über die Schwingungsantwort von dem Prozessor über die Kommunikationsschnittstelle zur Generation des kryptographischen Schlüssels unmittelbar an die externe Entität weiterleitet werden. Es kann aber auch bevorzugt sein, dass der Prozessor die Messdaten über die Schwingungsantwort vor der Weiterleitung vorverarbeitet. Fehlerkorrekturverfahren zur Bereitstellung besonders zuverlässiger Schlüssel, beispielweise zur Rauschunterdrückung in den Messdaten, können mithin bevorzugt auf dem Prozessor und/oder der externen Entität durchgeführt werden.

In bevorzugten Ausführungsformen erstellt der Prozessor auf der Grundlage eines Eingangssignals der PUF während der Herstellung und Prüfung des Systems eine Challenge-Response-Datenbank. Die Challenge-Response-Datenbank umfasst bevorzugt eine Vielzahl von Challenges und eine Vielzahl von Antworten, wobei jede Challenge bevorzugt mit mindestens einer Antwort aus der Vielzahl der Antworten verknüpft ist. Die Kommunikationsschnittstelle kommuniziert die Vielzahl der Herausforderungen in den Prozessor hinein und die Vielzahl der Antworten aus dem Prozessor heraus.

Durch eine derart erhalten PUF-basierte Datenbank für die Challenge-Response, welche während der Herstellung und Prüfung des Systems erstellt wurde, kann ein besonders sicheres Verfahren zur Authentifizierung und/oder Feststellung der Identität eines Objektes genutzt werden. Bei dem Objekt kann es sich um vorzugsweise um ein elektronisches Gerät oder aber einen Prozessor selbst handeln.

Bevorzugt wird eine Challenge zuerst von einer vertrauenswürdigen Entität während einer vertrauenswürdigen Transaktion empfangen, und dementsprechend wird als Response auf die Challenge auf der Grundlage eines auf dem PUF-Element basierenden Eingangssignals eine Response generiert. Die Response wird an die vertrauenswürdige Entität übermittelt. Die vertrauenswürdige Entität authentifiziert das Objekt oder stellt eine Identität fest, indem sie die Response mit einer auf der PUF basierenden Challenge-Response-Datenbank vergleicht. Bei der Authentifizierung der Response kann ein Bestätigungssignal an das Objekt bzw. das elektronische Gerät ausgegeben werden.

In einem weiteren Aspekt betrifft die Erfindung ein elektronisches Gerät umfassend ein beschriebenes System zur Authentifizierung und/oder Feststellung der Identität des elektronischen Gerätes.

In einem weiteren Aspekt betrifft die Erfindung die Verwendung eines piezoelektrischen Resonators als physisch unklonierbare Funktion (PUF) zur Authentifizierung und/oder Feststellung der Identität eines Objektes, vorzugsweise ein elektronisches Gerät.

In einem weiteren Aspekt betrifft die Erfindung ein Verfahren zur Authentifizierung und/oder Feststellung der Identität eines Objektes auf Basis einer physisch unklonierbaren Funktion (PUF) umfassend
a. Bereitstellung eines PUF-Elementes, wobei das PUF-Element dafür konfiguriert ist einen kryptographischen Schlüssel zu erzeugen, welcher von den physikalischen Eigenschaften des PUF-Elementes abhängt, wobei das PUF-Element einen piezoelektrischen Resonator umfasst
b. Bereitstellung eines Prozessors, welcher mit dem PUF-Element verbunden ist
c. Senden und/oder Empfangen elektrischer Signale vom Prozessor an das PUF-Element zum Erhalten von Informationen über den kryptographischen Schlüssel des PUF-Elementes

Der durchschnittliche Fachmann erkennt, dass technische Merkmale, Definitionen und Vorteile bevorzugter Ausführungsformen, welche für das erfindungsgemäßen System offenbart wurden, gleichermaßen für das elektronisches Gerät, umfassend ein solches System, die Verwendung eines piezoelektrischen Resonators als PUF-Element sowie ein Verfahren zur Authentifizierung und/oder Feststellung der Identität eines Objektes gelten und umgekehrt.

In einer bevorzugten Ausführungsform umfasst das erfindungsgemäße Verfahren ferner die Schritte
a. Senden elektrischer Signale vom Prozessor an das PUF-Element zur Schwingungsanregung des piezoelektrischen Resonators
b. Empfangen einer Schwingungsantwort des piezoelektrischen Resonators durch den Prozessor
c. Auswertung der Schwingungsantwort in Abhängigkeit der Schwingungsanregung zur Zusammenstellung von Informationen über den kryptographischen Schlüssel

In einer besonders bevorzugten Ausführungsform wird das Verfahren zur Authentisierung in einem Challenge-Response-Verfahren genutzt wird, wobei bevorzugt der Prozessor eine Challenge von einer externen Entität empfängt und in Abhängigkeit der Challenge elektrische Signale an das PUF-Elemente sendet sowie elektrische Signale des PUF-Elementes als Antwort auf die Challenge empfängt und auf deren Basis einen Response geniert, welcher an die externen Entität übertragen wird.

### DETAILLIERTE BESCHREIBUNG

Im Folgenden soll die Erfindung an Hand von Beispielen näher erläutert werden, ohne auf diese beschränkt zu sein.

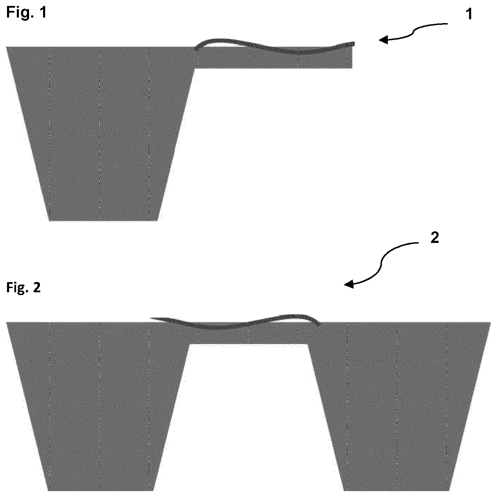

Fig. 1 und 2 illustrieren bevorzugte Ausführungsformen eines piezoelektrischen Resonators.
Fig. 1 zeigt einen bevorzugten piezoelektrischen Biegebalken 1, welche als Freischwinger mit einseitiger Aufhängung an einer Trägerstruktur ausgestaltet ist.
Fig. 2 zeigt eine bevorzugt piezoelektrische Membran 2, welche zwischen zwei Trägerstrukturen schwingfähig installiert vorliegt.

Beide Ausführungsformen eines piezoelektrischen Resonators eignen sich wie beschrieben als ein PUF-Element, welches dafür konfiguriert ist einen kryptographischen Schlüssel zu erzeugen, wobei der kryptographische Schlüssel von den physikalischen Eigenschaften des PUF-Elementes festgelegt wird und bevorzugt von einer Schwingungsantwort des piezoelektrischen Resonators auf eine Schwingungsanregung abhängt.

### BEZUGSZEICHENLISTE

- 1: Piezoelektrischer Biegebalken
- 3: Piezoelektrische Membran

### LITERATURVERZEICHNIS

Andersen B.D., and Belkerdid N.A., "Measurement sensitivity analysis of one port BAW resonators", in Proc. 50th IEEE International Frequency Control Symposium 1996, 5-7 June 1996, Honolulu HW, USA, 357-362.
Buchanan, J. D. R., Cowburn, R. P., Jausovec, A., Petit, D., Seem, P., Xiong, G., Atkinson, D., Fenton, K., Allwood, D.A., Bryan, M. T., Forgery: 'fingerprinting' documents and packaging, Nature, Brief Communications 436, pg. 475 (2005).
Chong, C. N., Jiang, D., Zhang, J., Guo, L., Anti-counterfeiting with a random pattern, SECURWARE 2008, pp. 146-153, IEEE, Los Alamitos (2008)].
Gassend B., Clarke D., Dijk M. van, and Devadas S., "Silicon physical random functions," in Proc. 9th ACM Conf. Comput. Commun. Security (CCS), pp. 148-160 (2002).
Herder C., Meng-Day (Mandel) Yu, Koushanfar F., and Devadas S., Physical Unclonable Functions and Applications: A Tutorial, Proceedings of the IEEE | Vol. 102, No. 8 (2014).
J.-W. Lee, D. Lim, B. Gassend, G. E. Suh, M. van Dijk, and S. Devadas, "A technique to build a secret key in integrated circuits with identification and authentication applications," in Proc. IEEE VLSI Circuits Symp., pp. 176-179 (2004).
Kucera M., Wistrela E., Pfusterschmied G., Ruiz-Díez V., Manzaneque T., Hernando-García J., Sánchez-Rojas J. L., Jachimowicz A., Schalko J., Bittner A., Schmid U., Design-dependent performance of self-actuated and self-sensing piezoelectric-AIN cantilevers in liquid media oscillating in the fundamental in-plane bending mode, Sensors and Actuators B: Chemical, Volume 200, Pages 235-244, ISSN 0925-4005 (2014).
L. Maya, T. Thundat, J. R. Thompson, and R. J. Stevenson, "Localized heating of nickel nitride/aluminum nitride nanocomposite films for data storage", Applied Phys. Lett., vol. 67, pp. 30343036, 1995.
Lancaster M.J., Powell J., and Porch A., "Thin-film ferroelectric microwave devices", Supercond. Sci. Technol., vol. 11, pp. 1323-1334, 1998.
Pappu R. S., Ravikanth P. S., Recht B., Taylor J., and Gershenfeld N., "Physical one-way functions," Science, vol. 297, pp. 2026-2030 (2002).
Rührmaier U., Hilgers C., Urban S. , Weiershäuser A., Dinter E., Forster B., und Jirauschek C. "Revisiting Optical Physical Unclonable Functions." IACR Cryptology ePrint Archive 2013: 215 (2013).
Ruhrmair, U., Hilgers C. Urban, S. Weiershäuser A., Dinter E., Forster B und Jirauschek C. et al. " Revisiting Optical Physical Unclonable Functions ". IACR Kryptologie ePrint Archiv 2013: 215 (2013).
Suh G. E. and Devadas S., "Physical unclonable functions for device authentication and secret key generation," in Proc. ACM/IEEE Design Autom. Conf., pp. 9-14. (2007).

## Patentansprüche

1. System zur Authentifizierung und/oder Feststellung der Identität eines Objektes auf Basis einer physisch unklonierbaren Funktion (PUF) umfassend
a. ein PUF-Element, wobei das PUF-Element dafür konfiguriert ist, einen kryptographischen Schlüssel zu erzeugen, welcher von den physikalischen Eigenschaften des PUF-Elementes abhängt und
b. einen Prozessor, welcher mit dem PUF-Element verbunden ist und dafür konfiguriert ist, durch Senden und/oder Empfangen elektrische Signale Informationen über den kryptographischen Schlüssel des PUF-Elementes zu erhalten und auf Basis der Information eine Authentifizierung und/oder Feststellung der Identität eines Objektes durchzuführen
**dadurch gekennzeichnet, dass**
das PUF-Element einen piezoelektrischen Resonator umfasst.

2. System gemäß dem vorherigen Anspruch
**dadurch gekennzeichnet, dass**
der piezoelektrische Resonator eine schwingfähige Struktur umfasst, wobei die schwingfähige Struktur einen piezoelektrischen Aktuator umfasst, welcher zur Anregung der schwingfähigen Struktur konfiguriert ist.

3. System gemäß einem der vorherigen Ansprüche
**dadurch gekennzeichnet, dass**
der piezoelektrische Resonator ein piezoelektrischer Biegebalken (1) und/oder eine piezoelektrische Membran (2) umfasst.

4. System gemäß einem der vorherigen Ansprüche
**dadurch gekennzeichnet, dass**
der kryptographische Schlüssel, welcher durch die physikalischen Eigenschaften des PUF-Elementes festgelegt wird von einer Schwingungsantwort des piezoelektrischen Resonators auf eine Schwingungsanregung abhängt.

5. System gemäß einem der vorherigen Ansprüche
**dadurch gekennzeichnet, dass**
die physikalischen Eigenschaften des piezoelektrischen Resonators, welche den kryptographischen Schlüssel des PUF-Elementes festlegen, während des Fertigungsprozesses festgelegt werden und als Zufallsgrößen in einen festgelegten Toleranzbereich für den Fertigungsprozess fallen.

6. System gemäß einem der vorherigen Ansprüche
**dadurch gekennzeichnet, dass**
die physikalischen Eigenschaften des piezoelektrischen Resonators, welche den kryptographischen Schlüssel des PUF-Elementes festlegen, durch eine Tuningeinheit zusätzlich beeinflusst werden, wobei die Tuningeinheit eine elektrostatische Tuningeinheit, eine magnetostatische Tuningeinheit und/oder eine thermische Tuningeinheit ist.

7. System gemäß einem der vorherigen Ansprüche
**dadurch gekennzeichnet, dass**
der piezoelektrische Resonator eine schwingfähige Struktur umfasst und die physikalischen Eigenschaften des piezoelektrischen Resonators, welche den kryptographischen Schlüssel des PUF-Elementes festlegen, ausgewählt sind aus der Gruppe enthaltend geometrische Abmessung der schwingfähigen Struktur, beispielsweise Länge, Höhe und/oder Dicke eines piezoelektrischen Balkens oder Membrandicke einer piezoelektrischen Membran, Elastizität, Schichtdicke und/oder Zusammensetzung eines piezoelektrischen Materials der schwingfähigen Struktur.

8. System gemäß einem der vorherigen Ansprüche
**dadurch gekennzeichnet, dass**
der piezoelektrische Resonator eine schwingfähige Struktur umfasst und das System eine Messeinheit zur Messung der Schwingungseigenschaften der schwingfähigen Struktur aufweist.

9. System gemäß dem vorherigen Anspruch
**dadurch gekennzeichnet, dass**
die Messeinheit eine elektrische Messeinheit ist, bevorzugt zur Messung der Schwingungseigenschaften der schwingfähigen Struktur des piezoelektrischen Resonators durch eine Impedanzmessung und/oder eine kapazitive Messung und/oder
die Messeinheit eine optische Messeinheit ist, bevorzugt umfassend einen Photonenstrahler und einen Photodetektor, wobei der Photonenstrahler derart auf die schwingfähige Struktur ausgerichtet ist, dass mittels des Photodetektors die Schwingungseigenschaften der schwingfähigen Struktur gemessen werden können.

10. System gemäß einem der vorherigen Ansprüche
**dadurch gekennzeichnet, dass**
das PUF-Element zwei oder mehr piezoelektrische Resonatoren umfasst, welche seriell oder parallel mit einander verbunden sind, wobei bevorzugt der Output eines piezoelektrischen Resonators als Input eines weiteren piezoelektrischen Resonators genutzt wird, um miteinander verbundene kryptographische Schlüssel zu erzeugen, die in einem Schlüsselbund organisiert werden können.

11. System gemäß einem der vorherigen Ansprüche
**dadurch gekennzeichnet, dass**
das System eine mit dem Prozessor verbundene Kommunikationsschnittstelle aufweist, welche dafür konfiguriert ist, von einer externen Entität eine Challenge zu empfangen und eine Response zu senden, wobei der Prozessor dafür konfiguriert ist, als Antwort auf die Challenge einen Response zu generieren, welcher von den physikalischen Eigenschaften des PUF-Elementes abhängt.

12. Elektronisches Gerät
umfassend ein System gemäß einem der vorherigen Ansprüche zur Authentifizierung und/oder Feststellung der Identität des elektronischen Gerätes.

13. Verwendung eines piezoelektrischen Resonators als physisch unklonierbare Funktion (PUF) zur Authentifizierung und/oder Feststellung der Identität eines Objektes.

14. Verfahren zur Authentifizierung und/oder Feststellung der Identität eines Objektes auf Basis einer physisch unklonierbaren Funktion (PUF) umfassend
a. Bereitstellung eines PUF-Elementes, wobei das PUF-Element dafür konfiguriert ist einen kryptographischen Schlüssel zu erzeugen, welcher von den physikalischen Eigenschaften des PUF-Elementes abhängt, wobei das PUF-Element einen piezoelektrischen Resonator umfasst
b. Bereitstellung eines Prozessors, welcher mit dem PUF-Element verbunden ist
c. Senden und/oder Empfangen elektrischer Signale vom Prozessor an das PUF-Element zum Erhalten von Informationen über den kryptographischen Schlüssel des PUF-Elementes
d. Durchführung einer Authentifizierung und/oder Feststellung der Identität des Objektes anhand der erhaltenen Informationen.

15. Verfahren gemäß dem vorherigen Anspruch
**dadurch gekennzeichnet, dass**
das Verfahren ferner folgende Schritte umfasst
a. Senden elektrischer Signale vom Prozessor an das PUF-Element zur Schwingungsanregung des piezoelektrischen Resonators
b. Empfangen einer Schwingungsantwort des piezoelektrischen Resonators durch den Prozessor
c. Auswertung der Schwingungsantwort in Abhängigkeit der Schwingungsanregung zur Zusammenstellung von Informationen über den kryptographischen Schlüssel
und/oder
das Verfahren zur Authentisierung in einem Challenge-Response-Verfahren genutzt wird, wobei bevorzugt der Prozessor eine Challenge von einer externen Entität empfängt und in Abhängigkeit der Challenge elektrische Signale an das PUF-Elemente sendet sowie elektrische Signale des PUF-Elementes als Antwort auf die Challenge empfängt und auf deren Basis einen Response geniert, welcher an die externen Entität übertragen wird.
